(19) Europäisches Patentamt
European Patent Office
Office européen des brevets

(11) **EP 2 449 343 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **10725623.2**

(22) Anmeldetag: **17.06.2010**

(51) Int Cl.:
**G01C 3/08** (2006.01)

(86) Internationale Anmeldenummer:
**PCT/EP2010/003665**

(87) Internationale Veröffentlichungsnummer:
**WO 2011/000482 (06.01.2011 Gazette 2011/01)**

(54) **VORRICHTUNG, SENSOR UND VERFAHREN ZUR VISUELLEN ENTFERNUNGSBESTIMMUNG ZU EINEM OBJEKT**

APPARATUS, SENSOR AND METHOD FOR VISUAL DETERMINATION OF THE RANGE TO AN OBJECT

DISPOSITIF, DÉTECTEUR ET PROCÉDÉ POUR DÉTERMINER VISUELLEMENT LA DISTANCE PAR RAPPORT À UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **02.07.2009 DE 102009031562**

(43) Veröffentlichungstag der Anmeldung:
**09.05.2012 Patentblatt 2012/19**

(73) Patentinhaber: **Valeo Schalter und Sensoren GmbH**
**74321 Bietigheim-Bissingen (DE)**

(72) Erfinder:
• **GOTZIG, Heinrich**
  **74081 Heilbronn (DE)**
• **HEDDERICH, Markus**
  **74354 Besigheim (DE)**

(74) Vertreter: **Jauregui Urbahn, Kristian**
**Valeo Schalter und Sensoren GmbH**
**VIC-E-IP**
**Laiernstraße 12**
**74321 Bietigheim-Bissingen (DE)**

(56) Entgegenhaltungen:
EP-A1- 1 953 504     WO-A1-92/03702
DE-C1- 19 504 039

**Beschreibung**

Stand der Technik

Die Erfindung betrifft eine Vorrichtung bzw. einen Sensor bzw. ein Verfahren zur visuellen Entfernungsbestimmung zu einem Objekt gemäß den Oberbegriffen der unabhängigen Ansprüche.

Eine visuelle Entfernungsbestimmung erfolgt entweder mittels einer Stereokamera, bei der ein Objekt, zu dem eine Entfernung bestimmt werden soll, mit zwei um einen bekannten Abstand, der sogenannten Messbasis bzw. Basis, voneinander beabstandeten, jeweils mit einem optischen Linsensystem identischer Brennweite ausgestatteten Kameras gleichzeitig erfasst wird, oder alternativ mittels einer Monokamera durch Vergleichen von Bildern, welche bei bewegter Kamera zu zwei verschiedenen Zeitpunkten erfasst werden.

Nachteile sind im Fall von Stereokameras deren hohe Kosten beispielsweise bedingt durch einen hohen Installationsaufwand bei Einbau in ein Fahrzeug, etwa wegen der erforderlichen exakten Anordnung einer Vielzahl von Komponenten am Fahrzeug, insbesondere mindestens zweier Kameras samt Verkabelung und im Fall von Monokameras deren ungenaues Ergebnis der Entfernungsbestimmung.

Durch die WO 92/03702 sind eine Vorrichtung und ein Sensor zur visuellen Entfernungsbestimmung zu einem Objekt bekannt. Der Sensor besteht aus einem bildgebenden Sensor, einem sogenannten Imager, mit mehreren Fotoelementen bzw. Pixeln sowie einem dem bildgebenden Sensor zugeordneten optischen Linsensystem bestehend aus einer Hauptlinse und mehrerer dieser entlang der optischen Achse nachgeschaltet in einer Ebene liegender Linsenelemente gleicher Brennweite. Jedem Linsenelement sind dabei mehrere Fotoelemente bzw. Pixel des bildgebenden Sensors zugeordnet. Die einem Linsenelement zugeordneten Fotoelemente bzw. Pixel bilden gemeinsam ein Makropixel, jedes Fotoelement bzw. Pixel eines Makropixels jeweils ein Subpixel. Eine Auswerteeinrichtung setzt aus den Signalen der Subpixel Subbilder zusammen, von denen jedes Subbild aus jeweils einem Subpixel jeden Makropixels zusammengesetzt ist. Jedes Subbild entspricht dabei einem Blick des gesamten Objektfelds durch eine Partie der Hauptlinse. Die Auswerteeinheit bestimmt die Entfernung zu einem Objekt innerhalb des Objektfelds durch Vergleich der Parallaxen der Subbilder.

Durch die DE 30 18 470 A1 ist eine Vorrichtung zur visuellen Entfernungsbestimmung zu einem Objekt bekannt. Die Vorrichtung besteht aus zwei Sensoren mit jeweils einem bildgebenden Sensor mit mehreren Fotoelementen bzw. Pixeln sowie zwei optischen Linsensystemen, von denen jeweils eines einem bildgebenden Sensor zugeordnet ist. Jedes der Linsensysteme projiziert dabei Ausschnitte einander entsprechender Zeilen zweier von dem Objekt erhaltener Bilder auf die Bildsensoren. Die Vorrichtung verfügt darüber hinaus über eine mit den bildgebenden Sensoren verbundene, die auf die einzelnen Fotoelemente abgebildeten Bilder des Objekts auswertende Einrichtung. Die Einrichtung verfügt über Mittel zur Bestimmung einer Entfernung zu dem Objekt durch Vergleich der Position des Bildes des Objekts auf dem einen bildgebenden Sensor mit der Position des Objekts auf dem anderen bildgebenden Sensor. Die Fotoelemente beider bildgebender Sensoren sind ferner zu einer einzigen Sensorzeile zusammengefasst. Benachbarte Fotoelemente gehören dabei unterschiedlichen bildgebenden Sensoren an. Jedem Paar benachbarter Fotoelemente unterschiedlicher bildgebender Sensoren ist ein Linsenelement in Form einer Zylinderlinse unmittelbar vorgeordnet bzw. jedem Linsenelement ein Paar benachbarter Fotoelemente unterschiedlicher bildgebender Sensoren zugeordnet. Jedes Paar benachbarter Fotoelemente ist so hinter dessen zugeordnetem Linsenelement angeordnet, dass beide Fotoelemente gegenüber der Achse der Zylinderlinse verschoben sind. Durch ihre Verschiebung gegenüber der Achse der Zylinderlinse und durch ihre Breite weisen die beiden einem Linsenelement zugeordneten Fotoelemente eine Richtungscharakteristik mit einem solchen Richtungs- und Öffnungswinkel auf, dass das eine Fotoelement lediglich von einem Strahlenbündel erfasst wird, das einen Zeilenpunkt durch das eine optische Linsensystem abbildet, während das andere Fotoelement lediglich von einem Strahlenbündel erfasst wird, das einen Zeilenpunkt durch das andere optische Linsensystem abbildet. Beide optische Linsensysteme weisen dabei identische Brennweiten auf, ebenso wie die Linsenelemente identische Brennweiten aufweisen.

Durch die DE 30 11 054 C2 ist ein Sensor zur visuellen Entfernungsbestimmung zu einem Objekt bekannt. Der Sensor besteht aus einem bildgebenden Sensor mit mehreren Fotoelementen bzw. Pixeln sowie einem dem bildgebenden Sensor zugeordneten optischen Linsensystem. Das optische Linsensystem besteht aus einer Objektivlinse sowie aus mehreren dieser nachgeordneten Linsenelementen identischer Brennweite, welche jeweils zwei Fotoelementen des bildgebenden Sensors zugeordnet sind. Das optische Linsensystem weist darüber hinaus eine der Objektivlinse nach- und den Linsenelementen vorgeordnete Korrekturlinse auf, welche die von jedem Linsenelement abgelenkte Strahlung im Wesentlichen gleichmäßig um die optische Achse verteilt.

Darüber hinaus sind durch die DE 196 50 863 C1 zur Entfernungsbestimmung Radar- (RADAR; Radio Detection And Ranging) Laser- oder auch Infrarotsensoren bekannt, mittels denen ein Objekt, zu dem die Entfernung bestimmt werden soll, mit elektromagnetischen Wellen bestimmter Wellenlängen bestrahlt wird, und welche anhand der vom Objekt reflektierten elektromagnetischen Wellen die Entfernung zum Objekt bestimmten.

Aus EP 1 953 504 sind ein Verfahren sowie eine optoelektronische Vorrichtung bekannt, mit den von einer Lichtquelle erzeugte Lichtstrahlen als Lichtfleck auf einen Gegenstand treffen und die vom Gegenstand rückgestreuten und/oder reflektierten Lichtstrahlen nach dem Triangulationsprinzip von einer Empfangsanordnung erfasst werden. Die Lichtstrahlen in der Empfangsanordnung beaufschlagen über ein abbildendes Element ein aus Fotodetektoren bestehendes Pixelarray. Das Verfahren ist dadurch charakterisiert, dass das abbildende Element ausschließlich ein dem Pixelarray vorgeschaltetes Array von Einzeiabbildungselementen ist, welches ein einer Mehrzahl von zueinander beabstandeten Abbildungen des Lichtflecks entsprechendes Empfangssignalmuster auf dem Pixelarray erzeugt, und dass die Information über einen Tastabstand aus dem Empfangssignalmuster bestimmt wird.

Offenbarung der Erfindung

Die Aufgabe wird bei einem erfindungsgemäßen Sensor, bzw. einer erfindungsgemäßen Vorrichtung, bzw. einem erfindungsgemäßen Verfahren zur visuellen Entfernungsbestimmung zu einem Objekt, durch die Merkmale der Ansprüche 1, bzw. 2, bzw. 3 gelöst. Vorteile der Erfindung gegenüber dem Stand der Technik ergeben sich unter anderem dadurch, dass es nunmehr möglich ist, mit nur einem einzigen bildgebenden Sensor, analog einer Monokamera, dank eines optischen Linsensystems mit mindestens zwei Partien unterschiedlicher Brennweiten und diesen Partien zugeordneten Gruppen von Fotoelementen bzw. Pixeln des bildgebenden Sensors in einem statischen, d. h. nicht bewegten Zustand Entfernungen direkt zu bestimmen bzw. zu messen.

Die Fotoelemente der den Partien unterschiedlicher Brennweiten zugeordneten Gruppen sind gemäß der Erfindung schachbrettartig verteilt auf dem bildgebenden Sensor angeordnet. Nicht zu der beanspruchten Erfindung gehört eine Anordnung, bei der die Fotoelemente nach Brennweiten getrennt, konzentrisch kreisförmig oder konzentrisch rechteckförmig oder konzentrisch quadratisch auf dem bildgebenden Sensor angeordnet sind. Beispielsweise bei einer konzentrisch kreisförmigen Anordnung sind die Fotoelemente bzw. Pixel der den Partien unterschiedlicher Brennweiten zugeordneten Gruppen in Form von konzentrischen Ringen, d. h. in Form von Ringen mit gemeinsamem Mittelpunkt aber unterschiedlichen Weiten bzw., Durchmessern angeordnet. Dadurch ist denkbar, dass das optische Linsensystem beispielsweise durch eine Linse ähnlich einer Fresnellinse mit Ringen abwechselnd unterschiedlicher Brennweite gebildet wird. Beispielweise bei einer konzentrisch quadratischen Anordnung sind die Fotoelemente bzw. Pixel der den Partien unterschiedlicher Brennweiten zugeordneten Gruppen in Form von konzentrischen Quadraten, d. h. in Form von Quadraten mit gemeinsamem Mittelpunkt aber unterschiedlichen Seitenlängen angeordnet.

Besonders bevorzugt wird das optische Linsensystem durch mehrere Linsenelemente gebildet, wobei die Partien unterschiedlicher Brennweiten durch Linsenelemente unterschiedlicher Brennweite gebildet werden, sodass aus Sicht des bildgebenden Sensors die Fotoelemente bzw. Pixel der Partien unterschiedlicher Brennweiten zugeordneten Gruppen mit Linsenelementen unterschiedlicher Brennweite bestückt sind.

Je Partie kann mindestens ein Linsenelement vorgesehen sein.

Erfindungsgemäß kann darüber hinaus eine Einrichtung vorgesehen sein zur Beleuchtung des Objekts mit elektromagnetischen Wellen mindestens einer Wellenlänge, zumindest deren von dem Objekt reflektierten Anteil von dem bildgebenden Sensor erfassbar ist. Durch Beleuchtung bzw. Bestrahlung des Objekts mit mindestens einer für den bildgebenden Sensor zumindest nach deren Reflexion von dem Objekt erfassbaren Wellenlänge sind die Vorrichtung bzw. der Sensor unabhängig vom Umgebungslicht bzw. von einer herrschenden Beleuchtungssituation.

Kurze Beschreibung der Zeichnung

Ein Ausführungsbeispiel der Erfindung ist in der einzigen Figur der Zeichnung dargestellt und nachfolgend näher erläutert. Es zeigt:

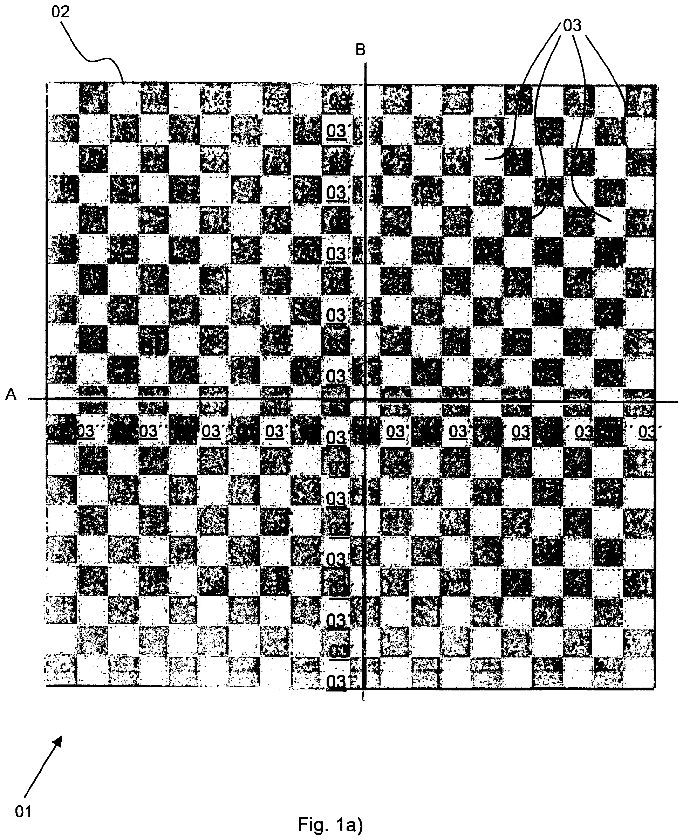

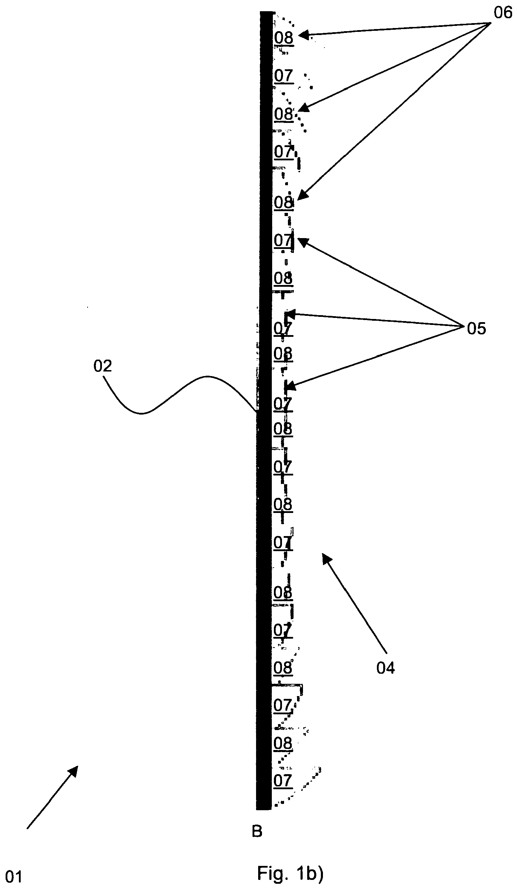

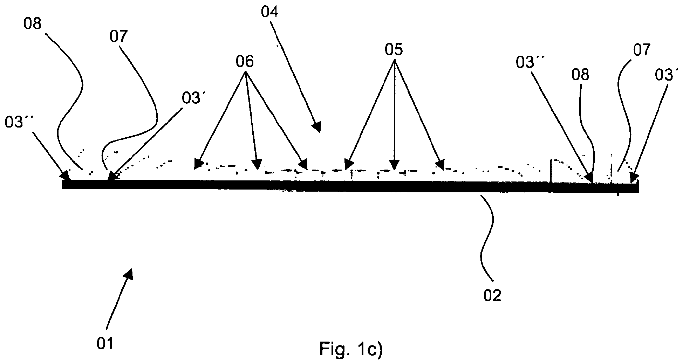

Fig. 1 eine schematische Darstellung eines erfindungsgemäßen Sensors in Fig. 1a) in einer Draufsicht, in Fig. 1b) in einem Querschnitt entlang der in Fig. 1a) eingezeichneten Linie A, in Fig. 1c) in einem Querschnitt entlang der in Fig. 1a) eingezeichneten Linie B.

Weg zur Ausführung der Erfindung

Ein in Fig. 1 dargestellter Sensor 01 zur visuellen Entfernungsbestimmung zu einem Objekt besteht aus einem bildgebenden Sensor 02 mit mehreren Fotoelementen 03 sowie einem dem bildgebenden Sensor 01 zugeordneten optischen Linsensystem 04. Das optische Linsensystem 04 weist beispielsweise zwei Partien 05, 06 mit unterschiedlichen Brennweiten auf, welche unterschiedlichen Gruppen von Fotoelementen 03 des bildgebenden Sensors 02 zugeordnet sind.

Die Fotoelemente 03' bzw. 03" der den Partien 05, 06 unterschiedlicher Brennweiten zugeordneten Gruppen sind erfindungsgemäß schachbrettartig verteilt auf dem bildgebenden Sensor 02 angeordnet. Das optische Linsensystem 04 kann durch mehrere Linsenelemente 07, 08 gebildet werden. Die Partien 05, 06 unterschiedlicher Brennweiten werden dabei vorzugsweise durch Linsenelemente 07, 08 unterschiedlicher Brennweite gebildet, sodass aus Sicht des bildgebenden Sensors 02 die Fotoelemente 03 bzw. Pixel der Partien 05, 06 unterschiedlicher Brennweiten zugeordneten Gruppen mit Linsenelementen 07, 08 unterschiedlicher Brennweite bestückt sind.

Der Sensor 01 kann besonders vorteilhaft in Verbindung mit einer Vorrichtung verwendet werden, welche zusätzlich zu dem Sensor 01 noch über eine mit dem bildgebenden Sensor 02 des Sensors 01 verbundene Einrichtung verfügt, welche die auf einzelne Fotoelemente 03 abgebildeten Bilder eines Objekts, zu dem eine Entfernung bestimmt werden soll, auswertet. Die Einrichtung verfügt vorzugsweise über Mittel, mit denen die Entfernung zu dem Objekt durch Vergleich der Position des Bilds des Objekts zumindest innerhalb einer, einer ersten Partie 05 des optischen Linsensystems 04 zugeordneten Gruppe von Fotoelementen 03' mit der Position des Bilds des Objekts zumindest innerhalb einer, einer zweiten Partie 06 des optischen Linsensystems 04 zugeordneten zweiten Gruppe von Fotoelementen 03" bestimmt wird. Dieser Vergleich kann beispielsweise erfolgen, indem eine Gleichung der Art

$$Y = \tan\left(\alpha_1 \frac{X_1}{X_0}\right) \cdot X_1 - \tan\left(\alpha_2 \frac{X_2}{X_0}\right) \cdot X_2$$

gelöst wird, mit:

$Y =$ Entfernung zu dem Objekt;

$X_0 =$ Breite des bildgebenden Sensors bzw. Imagers;

$X_1 =$ Position des Objekts innerhalb der einer eine erste Brennweite aufweisenden ersten Partie des optischen Linsensystems zugeordneten Gruppe von Fotoelementen des bildgebenden Sensors bzw. Imagers;

$X_2 =$ Position des Objekts innerhalb der einer eine zweite Brennweite aufweisenden zweiten Partie des optischen Linsensystems zugeordneten Gruppe von Fotoelementen des bildgebenden Sensors bzw. Imagers;

$\alpha_1 =$ Öffnungswinkel der eine erste Brennweite aufweisenden ersten Partie des optischen Linsensystems;

$\alpha_2 =$ Öffnungswinkel, der eine zweite Brennweite aufweisenden zweite Partie des optischen Linsensystems.

Mittels der Erfindung kann das Objekt mit nur einem bildgebenden Sensor 02 gleichzeitig mit zwei Brennweiten erfasst werden, wodurch die Entfernung zu dem Objekt mit nur einem einzigen bildgebenden Sensor 02 zuverlässig und genau bestimmt werden kann.

Ein mittels des Sensors 01 erfasstes Objekts wird sowohl auf den der Partie 05 aus Linsenelementen 07 mit einer ersten Brennweite zugeordneten Fotoelementen 03', als auch auf den der Partie 06 aus Linsenelementen 08 mit einer zweiten Brennweite zugeordneten Fotoelementen 03" abgebildet, wobei sich aufgrund der unterschiedlichen Brennweiten die beiden Bilder des Objekts an unterschiedlichen Punkten bzw. an unterschiedlichen Positionen befinden. Die Analyse der unterschiedlichen Positionen der Bilder in den unterschiedlichen Gruppen von Fotoelementen 03', 03" liefert die Entfernung zu dem Objekt.

Wichtig ist hervorzuheben, dass erfindungsgemäß auch ein optisches Linsensystem vorgesehen sein kann, das mehr als zwei Partien unterschiedlicher Brennweiten aufweist, wobei die Entfernungsbestimmung durch Vergleich der Positionen der Bilder eines Objekts erfolgen kann, die mit zwei oder mehreren unterschiedlichen Partien zugeordneten Fotoelementen eines bildgebenden Sensors erfasst wurden.

Die Erfindung kann beispielsweise in eine Kamera integriert sein, welche Bilder beispielsweise der Umgebung für ganz andere Zwecke erfasst. Beispielsweise kann es sich bei der Kamera um eine Rückfahrkamera oder Frontkamera eines Fahrzeugs handeln. Mit Hilfe der Erfindung ist es möglich, eine Zusatzfunktion in eine solche Kamera zu integrieren. So ist es beispielsweise möglich, mit einer Software die von den Fotoelementen 03', 03" einer, einer Partie 05, 06 des optischen Linsensystems 04 zugeordneten Gruppe erfassten Bilder zu jeweils einer Aufnahme der Umgebung zusammenzusetzen und beispielsweise auf einem Monitor darzustellen.

Die Erfindung kann beispielsweise in Verbindung mit einem Fahrassistenzsystem zur Unterstützung eines Fahrers eines Fahrzeugs im Straßenverkehr vorteilhaft angewendet werden, welches Fahrassistenzsystem eine visuelle Umfelderfassung aufweist.

Kurz auch als Fahrassistenzsysteme bezeichnete Fahrassistenzvorrichtungen dienen der Unterstützung eines Fahrers eines Kraftfahrzeugs bei der Durchführung bestimmter Vorgänge im Straßenverkehr. In modernen Kraftfahrzeugen, im Folgenden auch kurz als Fahrzeuge bezeichnet, werden bereits eine Vielzahl von Fahrassistenzsystemen für unterschiedlichste Aufgaben eingesetzt.

So dienen beispielsweise auch als Einparksysteme bezeichnete Fahrassistenzsysteme einer Unterstützung eines Fahrers eines Fahrzeugs beim Einparken in eine Parklücke. Dabei vermisst das Einparksystem mit beispielsweise seitlich am Fahrzeug angebrachten Sensoren eine mögliche Parklücke, berechnet aus den Lückendaten eine Einparktrajektorie und steuert das Fahrzeug beispielsweise durch aktiven Lenkeingriff in die Parklücke. Während des Einparkvorgangs bzw. beim Einparken wird die Entfernung zu die Parklücke begrenzenden Objekten durch Sensoren überwacht und gegebenenfalls vor einer drohenden Kollision gewarnt.

Als Navigationssysteme bekannte Fahrassistenzsysteme unterstützen einen Fahrer eines Fahrers bei der Navigation im Straßenverkehr. Navigationssysteme berechnen anhand von Sensordaten eine Fahrzeugposition in einer elektronisch hinterlegten Karte und ermöglichen eine Darstellung eines Kartenausschnitts, in dem sich das Fahrzeug befindet und/oder eine Zielführung zu einem gewünschten Fahrziel. Zur Unterstützung der Kartennavigation kann eine visuelle bzw. optische Umfelderfassung mittels einer Kamera und einer Bilderkennung vorgesehen sein.

Als Spurhaltesysteme bezeichnete Fahrassistenzvorrichtungen erfassen mittels geeigneter Sensoren einen Fahrbahn- bzw. Fahrspurverlauf und geben eine Warnung an den Fahrer eines Fahrzeugs aus, wenn das Fahrzeug die Fahrbahn bzw. die Fahrspur zu verlassen droht. Die Fahrspurerkennung erfolgt dabei durch eine visuelle bzw. optische Umfelderfassung. Beispielsweise wird mittels einer Kamera der Fahrbahnverlauf erfasst und aus den gewonnenen Bilddaten mittels Bilderkennung beispielsweise die Fahrspurmarkierungen und/oder die Randbebauung und/oder die Beschaffenheit der Oberfläche in der Umgebung zur Fahrbahn und - spurerkennung ermittelt.

In solchen und auch in anderen Fahrassistenzsystemen können mittels visueller Umfelderfassung ebenso Entfernungen zu beispielsweise erhabenen Objekten im Umfeld des Fahrzeugs erfasst werden, um hieraus gewünschte Informationen zu erhalten.

Beispielsweise kann eine Kamera eines Fahrerassistenzsystems mit visueller bzw. optischer Umfelderfassung mit einem optischen Linsensystem ausgestattet werden, welches mindestens zwei unterschiedlichen Gruppen von Fotoelementen des bildgebenden Sensors der Kamera zugeordnete Partien unterschiedlicher Brennweiten besitzt. Durch Vergleich von mit der Kamera bei unterschiedlichen Brennweiten aufgenommener Bilder eines Objekts ist eine Entfernungsbestimmung zu dem Objekt möglich.

**Patentansprüche**

1. Sensor (01) zur visuellen Entfernungsbestimmung zu einem Objekt, umfassend einen bildgebenden Sensor (02) mit mehreren Fotoelementen (03) sowie ein dem bildgebenden Sensor (02) zugeordnetes optisches Linsensystem (04), das mindestens zwei Partien (05, 06) mit unterschiedlichen Brennweiten aufweist, welche unterschiedlichen Gruppen von Fotoelementen (03', 03") des bildgebenden Sensors (02) zugeordnet sind,

   **dadurch gekennzeichnet, dass** die Fotoelemente (03', 03") der den Partien (05, 06) unterschiedlicher Brennweiten zugeordneten Gruppen schachbrettartig verteilt auf dem bildgebenden Sensor (02) angeordnet sind.

2. Vorrichtung zur visuellen Entfernungsbestimmung zu einem Objekt, umfassend einen Sensor (01) nach Anspruch 1 und eine mit dem bildgebenden Sensor (02) verbundene, auf einzelne Fotoelemente (03, 03', 03") abgebildete Bilder des Objekts auswertende Einrichtung, wobei die Einrichtung über Mittel zur Bestimmung einer Entfernung zu dem Objekt durch Vergleich der Position des Bilds des Objekts zumindest innerhalb einer ersten Gruppe von Fotoelementen (03') mit der Position des Bilds des Objekts zumindest innerhalb einer zweiten Gruppe von Fotoelementen (03") verfügt.

3. Verfahren zur visuellen Entfernungsbestimmung zu einem Objekt, bei dem das Objekt mittels eines bildgebenden Sensors (02) mit mehreren Fotoelementen (03) sowie mit einem dem bildgebenden Sensor (02) zugeordneten optisches Linsensystem (04) mit mindestens zwei Partien (05, 06) mit unterschiedlichen Brennweiten, welche unterschiedlichen Gruppen von Fotoelementen (03', 03") des bildgebenden Sensors (02) zugeordnet sind, erfasst wird, wobei das Objekt gleichzeitig zumindest von einer ersten Gruppe von Fotoelementen (03') aus mit einer ersten Brennweite und von einer zweiten Gruppe von Fotoelementen (03") aus mit einer zweiten, von der ersten Brennweite unterschiedlichen Brennweite erfasst wird, wobei die Entfernung zu dem Objekt durch Vergleich der Position des Bilds des Objekts innerhalb der ersten Gruppe von Fotoelementen (03') mit der Position des Bilds des Objekts innerhalb der zweiten Gruppe von Fotoelementen (03") bestimmt wird,

   **dadurch gekennzeichnet, dass**

   die Fotoelemente (03', 03") der den Partien (05, 06) unterschiedlicher Brennweiten zugeordneten Gruppen schachbrettartig verteilt auf dem bildgebenden Sensor (02) angeordnet sind.

4. Sensor, Vorrichtung oder Verfahren nach einem der vorhergehenden Ansprüche, **dadurch gekennzeichnet, dass** das optische Linsensystem (04) durch mehrere Linsenelemente (07, 08) gebildet wird, wobei die Partien (05, 06) unterschiedlicher Brennweiten durch Linsenelemente (07, 08) unterschiedlicher Brennweite gebildet werden.

5. Sensor, Vorrichtung oder Verfahren nach Anspruch 4, **dadurch gekennzeichnet, dass** je Partie (05, 06) mindestens ein Linsenelement (07, 08) vorgesehen ist.

6. Sensor, Vorrichtung oder Verfahren nach einem der vorhergehenden Ansprüche, **dadurch gekennzeichnet, dass** zumindest ein von dem Objekt reflektierter Anteil von von einer Einrichtung zur Beleuchtung des Objekts ausgesandten elektromagnetischen Wellen mindestens einer Wellenlänge von dem bildgebenden Sensor (02) erfassbar ist.

7. Verfahren nach einem der Ansprüche 3 bis 6, **dadurch gekennzeichnet, dass** die Entfernung durch Lösung der Gleichung:

$$Y = \tan\left(\alpha_1 \frac{X_1}{X_0}\right) \cdot X_1 - \tan\left(\alpha_2 \frac{X_2}{X_0}\right) \cdot X_2$$

bestimmt wird, mit

$Y$ = Entfernung zu dem Objekt;
$X_0$ = Breite des bildgebenden Sensors (02);
$X_1$ = Position des Objekts innerhalb der einer eine erste Brennweite aufweisenden ersten Partie (05) des optischen Linsensystems (04) zugeordneten Gruppe von Fotoelementen (03') des bildgebenden Sensors (02);
$X_2$ = Position des Objekts innerhalb der einer eine zweite Brennweite aufweisenden zweiten Partie (06) des optischen Linsensystems (04) zugeordneten Gruppe von Fotoelementen (03") des bildgebenden Sensors (02);
$\alpha_1$ = Öffnungswinkel der eine erste Brennweite aufweisenden ersten Partie (05) des optischen Linsensystems (04);
$\alpha_2$ = Öffnungswinkel der eine zweite Brennweite aufweisenden zweite Partie (06) des optischen Linsensystems (04).

**Claims**

1. Sensor (01) for visually determining the distance to an object, comprising an imaging sensor (02) having a plurality of photo elements (03) and an optical lens system (04) assigned to the imaging sensor (02), which has at least two sections (05, 06) with different focal lengths that are assigned to different groups of photo elements (03', 03") of the imaging sensor (02),
**characterized in that** the photo elements (03', 03") of the groups assigned to the sections (05, 06) of different focal lengths are arranged with a chequerboard-like distribution on the imaging sensor (02).

2. Apparatus for visually determining the distance to an object, comprising a sensor (01) according to Claim 1 and a device that is connected to the imaging sensor (02) and that evaluates images of the object imaged on individual photo elements (03, 03', 03"), wherein the device has means for determining a distance to the object by comparing the position of the image of the object at least within a first group of photo elements (03') to the position of the image of the object at least within a second group of photo elements (03").

3. Method for visually determining the distance to an object, in which the object is captured by means of an imaging sensor (02) having a plurality of photo elements (03) and having an optical lens system (04), assigned to the imaging sensor (02), with at least two sections (05, 06) with different focal lengths that are assigned to different groups of photo elements (03', 03") of the imaging sensor (02),
wherein the object is simultaneously captured from at least a first group of photo elements (03') with a first focal length and from a second group of photo elements (03") with a second focal length that differs from the first focal length, wherein the distance to the object is determined by comparing the position of the image of the object within the first group of photo elements (03') to the position of the image of the object within the second group of photo elements (03"), **characterized in that**
the photo elements (03', 03") of the groups assigned to the sections (05, 06) of different focal lengths are arranged with a chequerboard-like distribution on the imaging sensor (02).

4. Sensor, apparatus or method according to one of the preceding claims, **characterized in that** the optical lens system (04) is formed by a plurality of lens elements (07, 08), wherein the sections (05, 06) of different focal lengths are formed by lens elements (07, 08) of different focal lengths.

5. Sensor, apparatus or method according to Claim 4, **characterized in that** at least one lens element (07, 08) is provided in each section (05, 06).

6. Sensor, apparatus or method according to one of the preceding claims, **characterized in that** at least one component, reflected by the object, of electromagnetic waves with at least one wavelength emitted by a device for illuminating the object is detectable by the imaging sensor (02).

7. Method according to any one of Claims 3 to 6, **characterized in that** the distance is determined by the solution to the equation:

$$Y = \tan\left(\alpha_1 \frac{X_1}{X_0}\right) \cdot X_1 - \tan\left(\alpha_2 \frac{X_2}{X_0}\right) \cdot X_2$$

where:

$Y$ = distance to the object;
$X_0$ = width of the imaging sensor (02);
$X_1$ = position of the object within the group of photo elements (03') of the imaging sensor (02) assigned to a first section (05), having a first focal length, of the optical lens system (04);
$X_2$ = position of the object within the group of photo elements (03") of the imaging sensor (02) assigned to a second section (06), having a second focal length, of the optical lens system (04);
$\alpha_1$ = aperture angle of the first section (05), having a first focal length, of the optical lens system (04); and
$\alpha_2$ = aperture angle of the second section (06), having a second focal length, of the optical lens system (04).

**Revendications**

1. Capteur (01) de détermination visuelle de la distance par rapport à un objet, comprenant un capteur d'imagerie (02) pourvu de plusieurs éléments photoélectriques (03) ainsi qu'un système de lentilles (04) optique associé au capteur d'imagerie (02), lequel possède au moins deux parties (05, 06) ayant des distances focales différentes auxquelles sont associés des groupes différents d'éléments photoélectriques (03', 03") du capteur d'imagerie (02), **caractérisé en ce que** les éléments photoélectriques (03', 03") des groupes associés aux parties (05, 06) ayant des distances focales différentes sont disposés en étant distribués en damier sur le capteur d'imagerie (02).

2. Ensemble de détermination visuelle de la distance par rapport à un objet, comprenant un capteur (01) selon la revendication 1 et un dispositif relié au capteur d'imagerie (02) qui interprète les images de l'objet représentées sur des éléments photoélectriques (03, 03', 03") individuels, le dispositif disposant de moyens pour déterminer une distance par rapport à l'objet en comparant la position de l'image de l'objet au moins à l'intérieur d'un premier groupe d'éléments photoélectriques (03') à la position de l'image de l'objet au moins à l'intérieur d'un deuxième groupe d'éléments photoélectriques (03").

3. Procédé de détermination visuelle de la distance par rapport à un objet, selon lequel l'objet est acquis au moyen d'un capteur d'imagerie (02) pourvu de plusieurs éléments photoélectriques (03) ainsi qu'un système de lentilles (04) optique associé au capteur d'imagerie (02), lequel possède au moins deux parties (05, 06) ayant des distances focales différentes auxquelles sont associés des groupes différents d'éléments photoélectriques (03', 03") du capteur d'imagerie (02),
l'objet étant acquis simultanément au moins depuis un premier groupe d'éléments photoélectriques (03') ayant une première longueur focale et depuis un deuxième groupe d'éléments photoélectriques (03") ayant une deuxième longueur focale, différente de la première, la distance par rapport à l'objet étant déterminée par comparaison de la position de l'image de l'objet à l'intérieur du premier groupe d'éléments photoélectriques (03') à la position de l'image de l'objet à l'intérieur d'un deuxième groupe d'éléments photoélectriques (03")

7

**caractérisé en ce que**
les eléments photoélectriques (03', 03") des groupes associés aux parties (05, 06) ayant des distances focales différentes sont disposés en étant distribués en damier sur le capteur d'imagerie (02).

4. Capteur, arrangement ou procédé selon l'une des revendications précédentes, **caractérisé en ce que** le système de lentilles (04) optique est formé par plusieurs éléments lentilles (07, 08), les parties (05, 06) ayant des distances focales différentes étant formées par des éléments lentilles (07, 08) ayant des distances focales différentes.

5. Capteur, arrangement ou procédé selon la revendication 4, **caractérisé en ce qu'**au moins un élément lentille (07, 08) est présent pour chaque partie (05, 06).

6. Capteur, arrangement ou procédé selon l'une des revendications précédentes, **caractérisé en ce qu'**au moins une part réfléchie par l'objet, ayant au moins une longueur d'onde, des ondes électromagnétiques émises par un dispositif destiné à éclairer l'objet peut être acquise par le capteur d'imagerie (02).

7. Procédé selon l'une des revendications 3 à 6, **caractérisé en ce que** la distance est déterminée en résolvant l'équation :

$$Y = \tan\left(\alpha_1 \frac{X_1}{X_0}\right) \cdot X_1 - \tan\left(\alpha_2 \frac{X_2}{X_0}\right) \cdot X_2$$

où

$Y$ = distance de l'objet ;
$X_0$ = largeur du capteur d'imagerie (02) ;
$X_1$ = position de l'objet à l'intérieur du groupe d'éléments photoélectriques (03') du capteur d'imagerie (02) associé à une première partie (05), ayant une première distance focale, du système de lentilles (04) optique ;
$X_2$ = position de l'objet à l'intérieur du groupe d'éléments photoélectriques (03") du capteur d'imagerie (02) associé à une deuxième partie (06), ayant une deuxième distance focale, du système de lentilles (04) optique ;
$\alpha_1$ = angle d'ouverture d'une première partie (05), ayant une première distance focale, du système de lentilles (04) optique ;
$\alpha_2$ = angle d'ouverture d'une deuxième partie (06), ayant une deuxième distance focale, du système de lentilles (04) optique.

Fig. 1a)

Fig. 1b)

08

07

04

05

06

03´

03´´

03´´

03´

07

08

02

01

Fig. 1c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9203702 A
- DE 3018470 A1
- DE 3011054 C2
- DE 19650863 C1
- EP 1953504 A